# EUROPEAN PATENT APPLICATION

(11) **EP 1 764 015 A1**
(43) Date of publication of application: **21.03.2007**
(21) Application number: 06120604.1
(22) Date of filing: 13.09.2006
(51) Int. Cl.: A47J 31/06

(54) **Method for producing a coffee-based beverage and a coffee machine for implementing the method thereof**

(30) Priority: 14.09.2005 IT BO20050559
(71) Applicant: Grimac S.r.l., 40069 Zola Predosa (IT)
(72) Inventor: Campari, Enrico Gianfranco, 40100, BOLOGNA (IT); Fraboni, Beatrice, 40400, GRIZZANA MORANDI (IT); Levi, Giuseppe, 40127, BOLOGNA (IT); Odorici, Fabrizio, 40053, BAZZANO (IT)
(74) Representative: Jorio, Paolo

(57) **Abstract**

The method comprises a step of introducing water into a reservoir tank (8) to a certain level, a step in which the water present in the reservoir tank (8) is taken to a temperature higher than 50°C, a step in which such temperature higher than 50°C is maintained for a time depending on the degree of hardness of the water, a step in which the temperature of the water circulating in a heat exchanger (14) is increased to a temperature from 70 to 90°C, a step of inserting a dose (17) of coffee in a chamber (16), and a step in which a pump (12) is controlled so that the water is channelled towards the chamber (16) from which the beverage is released.

## Description

The present invention relates to a method for producing a coffee-based beverage.

The present invention also relates to a coffee machine which implements the aforesaid method.

As known, coffee machines, and in particular those for offices and homes, comprise a tank containing water, a heat exchanger, a pump adapted to take water from the reservoir tank and convey it through the heat exchanger to a chamber in which is present either a coffee wafer or a predetermined amount of coffee powder; such chamber being then provided with a nozzle through which liquid coffee is released. The heat exchanger consists of a metallic block presenting a first housing seat of an electrical resistor and a second housing seat in a body presenting a helical groove through which the water is heated and is channelled towards aforesaid chamber.

In the preparation of coffee, after powering the electrical resistor so that the heat exchanger is taken to a predetermined temperature, the water is channelled through the heat exchanger so as to take the water to a temperature of approximately 90°C. Such water flows through the coffee power so that it extracts the aromatic substances contained therein and the beverage is made. The quality of the beverage depends on a number of factors, including the quality of the coffee powder (grinding and preservation), the temperature of the water, the pressure at which the water flows through the coffee powder, and the hardness of the water which in essence is represented by the calcium content present in the water. We remark that a certain degree of water hardness is however required to make a high quality beverage and that consequently water which is non entirely calcium-free is required.

The preparation system of the beverage described above presents a plurality of drawbacks.

In particular, as concerns the temperature of the water reaching the heat exchanger, coffee machines are structured to operate in predetermined conditions and therefore the introduction of water at variable temperatures may negatively affect the extraction of aromatic substances present in the powdered coffee and consequently may negatively affect the quality of the beverage. A second drawback found in the aforesaid system consists in the ease at which lime is deposited within the heat exchanger which firstly causes the formation of scaling along the water channel and then in time fully obstructs said channel with consequent intervention at a service centre for maintenance. A third drawback found in the system described above consists in the formation in various points of the machine of bacteria colonies and mould which negatively affect the quality of the beverage and which may carry diseases. A last drawback found in coffee machines using wafers is that a previously used wafer is not recognised and a wafer may mistakenly be used several times.

It is the object of the present invention to make a method for producing a coffee-based beverage which allows to avoid the aforesaid drawbacks.

It is a further object of the present invention to make a coffee machine which implements the aforesaid method.

According to the present invention, it is obtained a method for producing a coffee-based beverage characterised in that it comprises:
a step of introducing water into a reservoir tank up to a certain level;
a step during which the water present in said reservoir tank is taken to a temperature higher than 50°C;
a step during which such temperature higher than 50°C is maintained for a time depending on the degree of hardness of the water;
a step in which the temperature is increased to a temperature higher than 70°C;
a step of inserting a dose of coffee in a chamber; and
a step during which the pump is controlled so that the water is channelled towards said chamber from which the beverage is released.

According to the present invention it is also made a coffee machine of the known type comprising:
a water reservoir tank;
a first water conduit which takes from said reservoir tank;
a pump connected to said first conduit and from which a second conduit originates;
a heat exchanger provided with an electrical resistor, connected to said second conduit and from which it is originated a channel adapted to convey the heated water towards a chamber where a dose of coffee is placed in use; and
a nozzle which originates from said chamber and from which the coffee-based beverage is adapted to be released;
characterised in that said reservoir tank is provided with means adapted to increase the temperature of the water present in said reservoir tank.

The present invention will now be described with reference to the accompanying drawings which show a preferred embodiment thereof, and in which:
figure 1 is a perspective view of a coffee machine made according to the dictates of the present invention;
figure 2 is a block diagram with parts removed and with simplified outlines of the various components of the machine in figure 1;
figure 3 is a magnified cross-section of a heat exchanger of the machine in figure 1;
figure 4 is a plan view of a coffee wafer;
figure 5 is a block diagram of an electronic control unit of the machine in figure 1; and
figure 6 is a block diagram showing some steps of operation of the machine in figure 1.

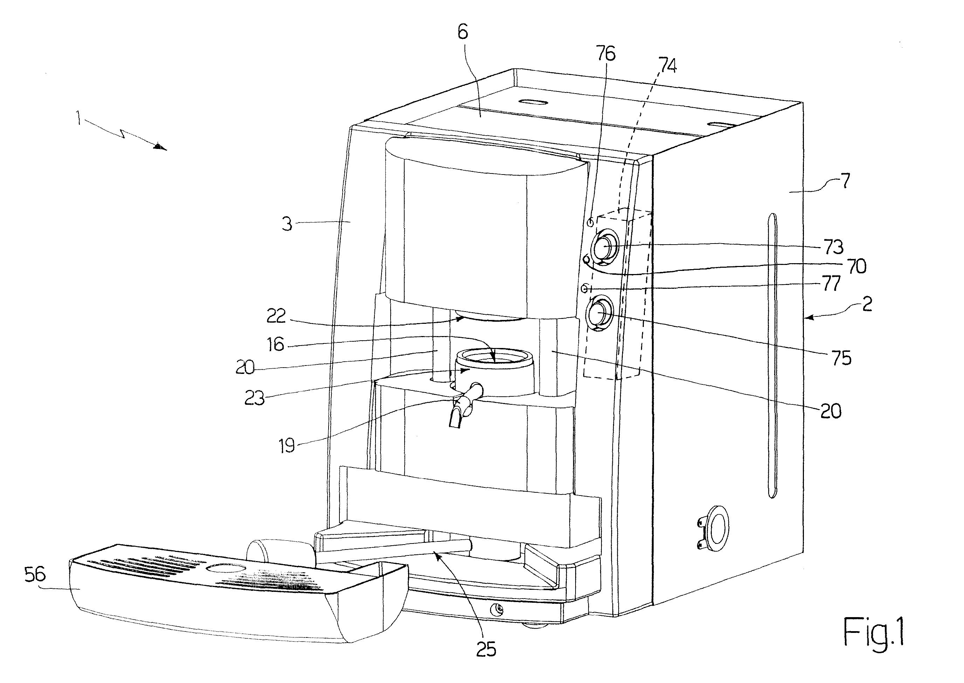

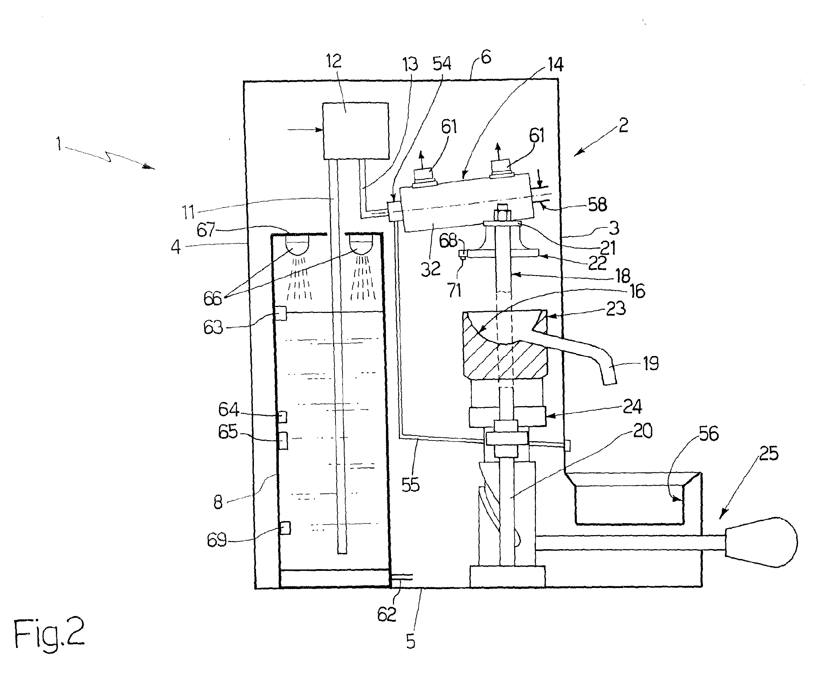

With reference to figures 1 and 2, it is indicated as a whole by 1 a coffee machine comprising a box structure 2 defined by a front wall 3, a rear wall 4, a base wall 5, an upper wall 6 and two side walls 7.

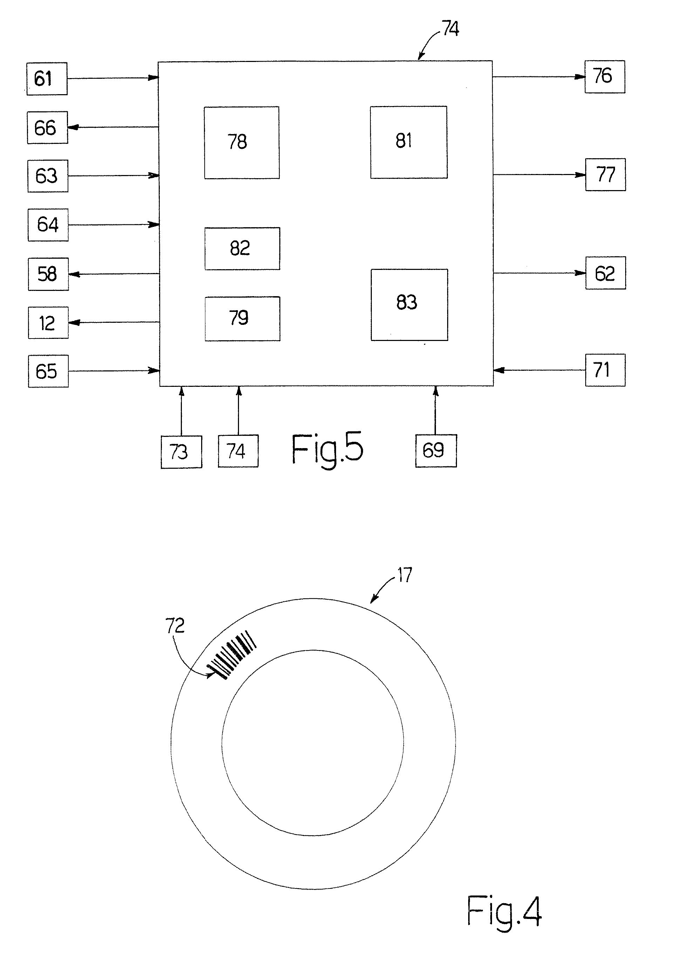

The machine 1 comprises:
a reservoir tank 8 installed within the structure 2 and containing water;
a first conduit 11 taking from the reservoir tank 8;
a pump 12 connected to the conduit 11 and from which a second conduit 13 originates;
a heat exchanger 14 connected to the second conduit 13 and from which it is originated a channel 15 adapted to convey the heated water to a chamber 16 where a coffee wafer 17 is placed in use (figure 4);
a frame 18 adapted to support at a determined level said heat exchanger 14; and
a nozzle 19 which originates from aforesaid chamber 16 and which is adapted to release liquid coffee.

The frame 18 comprises two vertical columns 20 which on one upper end support a plate 21 which in turn supports the heat exchanger 14. The chamber 16 is defined between two metallic bodies 22 and 23 of which body 22 is fastened to the heat exchanger 14 and body 23 is carried by a rod 24, by means of a displacement mechanism 25 of the known type, mobile between a lower position in which body 23 is at a distance from body 22 and an upper position in which body 23 is in contact with body 22, and a chamber 16 is defined between the same; the aforesaid nozzle 19 extending from the body 23.

The body 22 comprises an externally threaded upper segment 26 fastened in a threaded hole 27 made in the heat exchanger 14, a central segment 28, and a lower segment 31 on whose base surface a cavity is made which defines the chamber 16 with the corresponding cavity made on the upper surface of the body 23. The body 22 presents an axial through hole which forms the aforesaid channel 15 and which leads into the aforesaid cavity of segment 31.

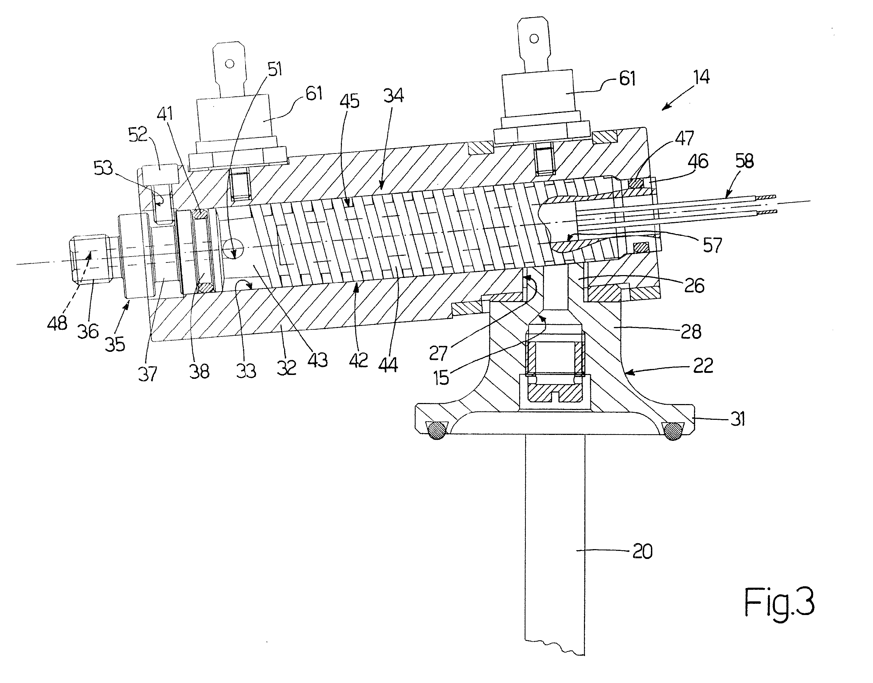

With reference to figure 3, the heat exchanger 14 comprises an essentially cylindrical metallic body 32 presenting an axial through hole 33 accommodating an essentially cylindrical metallic body 34. The body 34 presents a first axial end portion 35 presenting in sequence a segment 36 externally threaded to the hole 33, an intermediate segment 37 presenting an annular groove within the hole 33, and a segment 38 which supports an annular seal 41. The body 34 presents a central portion 42 within the hole 33 and presenting a reduced segment 43 with external diameter smaller than the internal diameter of the hole 33 and a long segment 44 on whose external surface a helical groove 45 is made. The body 34 presents a second axial end portion 46 within hole 33 and supporting an annular seal 47. The central portion 42 defines within the hole 33 and between the seals 41 and 47 a space which is reached by water from conduit 13 through an axial hole 48 made in portion 35 and a diametrical hole 51 made in the central portion 42 at segment 43.

With reference to figure 3, the axial position of the body 34 along the hole 33 is defined by a screw 52 fastened along a threaded hole 53 made in the body 32 and presenting a shank portion which engages the annular groove defined by the segment 37. Figure 2 schematically shows a three-way union 54 in which one way is engaged along segment 36, one way is connected to conduit 13 and one way is connected to a further conduit 55 whose free end leads onto wall 3 immediately over a tank 56 underneath. Such conduit 55 channels the water possibly remained within the heat exchanger 14 towards the tank 56 while the machine 1 is not in use. This channelling is favoured by the inclined position with respect to a horizontal plane of the heat exchanger 14. In essence, the end of the hole 33 accommodating the portion 35 of the body 34 is at a lower level than the end accommodating the portion 46 and therefore the circulating water follows an upward course.

With reference to figure 3, in body 34 and more precisely in portions 42 and 46 an axial blank hole 57 is made which accommodates the electrical resistor 58. The hole 27 made in the body 32 is made near the portion of the hole 33 accommodating the portion 42 of the body 34 near the portion 46. The heat exchanger 14 is preferably provided with two sensors 61 adapted to measure the temperature, one installed in the body 32 at the segment 43 and the second installed in the body 43 at, but diametrically opposite to, the hole 27. The helical groove 45 presents a progressively decreasing depth from segment 43 to portion 46, i.e. in the direction of circulation of the water.

With reference to figure 2, the reservoir tank 8 is made of thermally insulating material and is provided within with its base wall of an electrical resistor 62. Within the reservoir tank 8 there are installed a sensor 63 positioned at a certain level and adapted to measure the exceeding of such level by the water, a sensor 64 adapted to measure the temperature of the water contained in the reservoir tank 8, a sensor 65 adapted to measure, for example by measuring the pH, the degree of hardness of the water and in essence the percentage of calcium present in the water, a sensor 69 adapted to measure whether the level of water in the reservoir tank 8 is under a predetermined level and therefore the introduction of water into the reservoir tank 8 is required, and at least one source 66 of ultraviolet light installed on an upper wall 67 of the reservoir tank and facing the water underneath. The body 22 supports a bar code reader 71 at its appendix 68. Figure 4 shows the wafer 17 which is provided with an identifying bar code 72 along its circular crown.

With reference to figure 1, the machine 1 is provided with a button 73 adapted to control the electrical powering of an electronic control unit 74 and of the electrical resistor 58, a button 75 adapted to control the pump 12 by means of the control unit 74, an indicator light 76 adapted to indicate the electrical powering derived from the button 73, an indicator light 77 adapted to indicate the reaching of a predetermined temperature in the heat exchanger 14 measured by means of at least one of the sensors 61, and a light indicator 70 adapted to indicate that the water in the reservoir tank 8 is under a certain level.

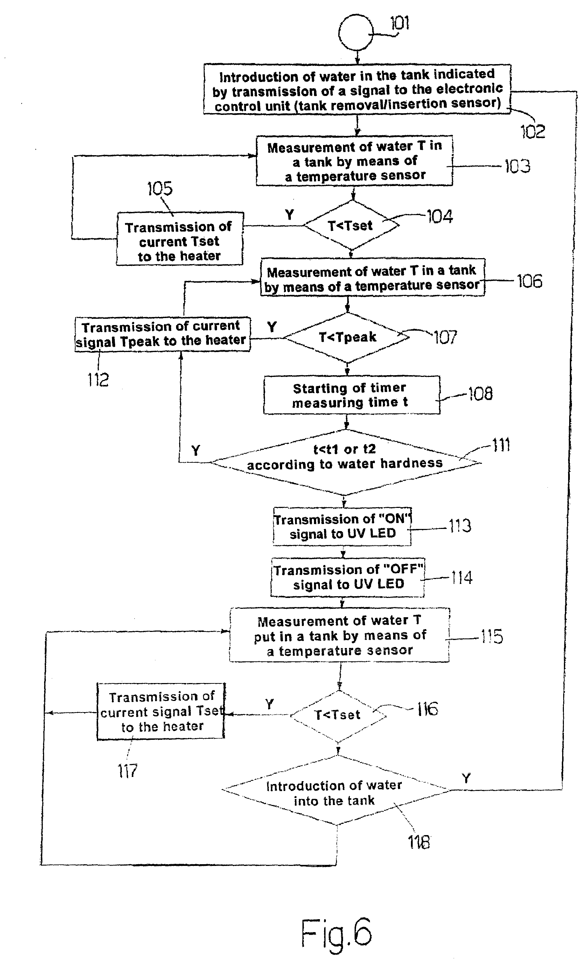

With reference to figure 5, the control unit 74 is adapted to manage the various components of the machine 1 and in particular to control, by means of a block 78, the various actuators (pump 12, electrical resistors 58 and 62, sources 66, and indicators 70, 76 and 77) and to receive signals, by means of a block 81, from the various sensors 61, 63, 64, 65, 69 and from the reader 71. The control unit 74 comprises a counter block 79 and a memory block 82 in which there are stored the temperatures to which the water in reservoir tank 8 and in the heat exchanger 14 is taken, and in which there are stored the codes 72 of the previously used wafers 17. The control unit 74 finally comprises a block 83 for comparing the various quantities measured in the machine 1.

The surfaces of the reservoir tank 8, the internal surfaces of the structure 2 and the surfaces of the various components installed in the structure 2 are covered with a polymer-based antibacterial coating which prevents bacteria from depositing on such surfaces. For the components made in plastic instead of the coating, it may be more convenient to mix a predetermined quantity of antibacterial polymers to the plastic granules.

Figure 6 shows a water treatment cycle within the reservoir tank 8. A starting block 101 is followed by a block 102 in which water is introduced into the reservoir tank 8 until a certain level indicated by sensor 63 is reached. Block 102 is followed by block 103 in which sensor 64 measures the temperature T of the water present in the reservoir tank 8. Block 103 is followed by block 104 in which the temperature T measured by the sensor 64 is compared against a first predetermined temperature Tset which is assumed from 20 to 50°C. If the temperature of the water within the reservoir tank is lower than the aforesaid first predetermined temperature Tset, block 104 is followed by a block 105, otherwise it is followed by a block 106.

In block 105, the resistor 62 is powered and then from block 105 the method goes back to block 103. In block 106, the temperature T of the water in the reservoir tank 8 is measured again by sensor 64. Block 106 is followed by a block 107 in which the temperature T measured by the sensor 64 is compared against the second predetermined temperature Tpeak which is assumed higher than 50°C and in particular between 70 and 90°C. If the temperature T measured by the sensor 64 is lower than the aforesaid second predetermined temperature Tpeak, block 107 is followed by a block 112, otherwise block 107 is followed by a block 108. In block 112, the resistor 62 is powered and then from block 112, the method goes back to block 106.

In block 108, the counter block 79 which measures the time t is activated and the degree of hardness of the water present in the reservoir tank 8 is measured by means of the sensor 65. In the memory block 78, a table is stored in which a time td is associated to each degree of hardness of the water. Block 108 is followed by block 11 in which the time measured by counter block 79 is compared against the time td related to the measured degree of hardness. If the time t measured by the counter block 79 is lower than the time td, block 11 is followed by block 112, otherwise block 11 is followed by block 113. In block 113, the sources 66 are controlled for a predetermined time. Block 113 is followed by block 114 in which the sources 66 are deactivated. Source 114 is followed by a block 115 in which the temperature of the water present in the reservoir tank 8 is measured by means of the sensor 64.

Block 115 is followed by block 116 in which the temperature T measured by the sensor 64 is compared against the aforesaid first predetermined temperature Tset, which as mentioned is assumed from 20 to 50°C. If the temperature T of the water in the reservoir tank 8 is lower than the aforesaid first predetermined temperature Tset, block 116 is followed by block 117, otherwise it is followed by a block 118. In block 117, the resistor is powered and then from block 117 the method goes back to block 115. In block 118, it is measured whether the level of the water in the reservoir tank 8 by sensor 69 is under a certain level. When the level of the water is lower than a certain predetermined level in block 118, block 102 follows, otherwise block 118 is followed by block 115.

The method according to the present invention comprises:
a step of introducing water into the reservoir tank 8 up to a certain level measured by the sensor 63;
a step during which the water in the reservoir tank 8 is taken to a first temperature from 20 to 50°C;
a step during which the water temperature present in the reservoir tank 8 is taken to a second temperature higher than 50°C and preferably to a temperature between 70 and 90°C;
a step of activating the sources 66;
a step during which such temperature higher than 50°C is maintained for a time depending on the degree of hardness of the water;
a step during which the temperature of the water within the reservoir tank 8 is maintained at the aforesaid first predetermined temperature;
a step during which, by powering the electrical resistor 58, the temperature of the water circulating in the heat exchanger 14 is increased to a temperature from 70 to 90°C;
a step of inserting a wafer 17 into chamber 16;
a step of checking the wafer 17 so as to stop the operation of the pump 12 if the wafer 17 was previously used; and
a step during which the pump 12 is operated so that the water, by crossing the heat exchanger, is taken from aforesaid first temperature to a temperature determined by the electrical resistor 58 and then channelled towards the chamber 16 from which the beverage is released.

It may be observed that the method described above firstly envisages the sanitation of the water present in the reservoir tank 8 before the real preparation of the beverage. The sanitation firstly consists in taking the temperature of the water within the reservoir tank 8 to a fixed value regardless of ambient temperature and of the temperature of the water introduced into the reservoir tank, and then in taking the temperature of the water present in the reservoir tank 8 to such a value and for such a time that some lime is deposited on the bottom of the reservoir tank 8, and finally in maintaining the temperature of the water present in the reservoir tank 8 constant and in activating the ultraviolet ray sources 66. It must be stressed that the steps envisaging sanitation are performed whenever water is added into the reservoir tank 8. Furthermore, the fact contributing to the sanitation is that the various surfaces of the machine 1 are coated with a layer of antibacterial material and that previously used wafers 17 are recognised and rejected. The method also allows to measure and then indicate the minimum and maximum level of the water in the reservoir tank 8.

In use, after connecting the machine 1 to the electrical mains, the resistor 58 is powered and starts by Joule effect to increase the temperature of the heat exchanger 14. When the temperature measured by the sensors 61 exceeds a predetermined threshold value and preferably 70°C, the indicator 77 lights up. It is now possible to operate the pump 12 which takes water from the reservoir tank 8 and channels it to the heat exchanger 14. Naturally, a wafer is firstly inserted in the chamber 16 and such chamber 16 is closed by means of the mechanism 25. Now the water flows along the helical groove 45 and then through the channel 15 into chamber 16 from where it is released through the nozzle 19. Once the pump 12 is deactivated, the water present in the heat exchanger 14 flows through conduit 55 towards the tank 56 due to the angular position of the heat exchanger with respect to a horizontal plane.

According to the above, it will be apparent that numerous advantages may be obtained by means of the construction from the present invention.

In particular, it is made a method and a machine in which the entire preparation process of the beverage is effectively sanitised. The sanitation process also allows to decrease the presence of calcium sent to the heat exchanger 14 and therefore preserves the latter and all the conduits and elements concerned by the flow of water from scaling and possible obstructions. Furthermore, it is made a coffee machine in which the electrical resistor 58 is accommodated directly in the body 34 on whose external surface water is channelled. Consequently, the heating of the water is more efficient, faster and above all requires less power, also considering that the water reaches the heat exchanger 14 already at a certain temperature. It must also be stressed that the body 32 of the heat exchanger 14 is of much smaller dimensions than that of the exchanger currently mounted in marketed machines. Consequently, both the dimensions and the cost of the heat exchanger 14 in the machine 1 object of the present invention are reduced. Furthermore, the inclined position of the heat exchanger 14, with the entrance of the water at a lower level than the output level, allows the flow of water present in the heat exchanger 14 towards a drain so that such water does not stagnate in the heat exchanger 14 and favour the deposit of lime along the groove 45 after using the water for preparing the beverage.

Finally, it is apparent that changes and variants may be made to the method and to the coffee machine 1 here described and illustrated without however departing from the protective scope of the present invention.

In particular, there may be arranged a sensor 63 for detecting the insertion in the structure 2 of the reservoir tank 8. In essence, the reservoir tank 8 may be removed, filled with water and reintroduced into the structure 2.

## Claims

1. A method for producing a coffee-based beverage, **characterised in that** it it comprises:
a step of introducing water into a reservoir tank (8) to a certain level;
a step during which the water present in said reservoir tank (8) is taken to a temperature higher than 50°C;
a step during which such temperature exceeding 50°C is maintained for a time depending on the degree of hardness of the water;
a step in which the temperature of the water is increased to a value higher than 70°C;
a step of inserting a dose (17) of coffee in a chamber (16); and
a step during which the pump (12) is controlled so that the water is channelled towards said chamber (16) from which the beverage is released.

2. A method according to claim 1, **characterised in that** it comprises a step following said step in which said temperature higher than 50°C is maintained for a time depending on the degree of hardness of the water, during which the temperature of the water present in said reservoir tank (8) is maintained at a predetermined value from 20 to 50°C.

3. A method according to claim 1 and/or 2, **characterised in that** it comprises a step following said step of introducing water into said reservoir tank (8), during which the temperature of the water present in the reservoir tank (8) is taken to a temperature from 20 to 50°C.

4. A method according to at least one of the preceding claims, **characterised in that** it comprises a step in which it is activated at least one ultraviolet ray source (66) directed towards the water present in said reservoir tank (8).

5. A method according to at least one of the preceding claims, **characterised in that** it comprises a step of measuring the temperature of water present in said reservoir tank (8).

6. A method according to at least one of the preceding claims, **characterised in that** it comprises a step of measuring the minimum and maximum level of water present in said reservoir tank (8).

7. A method according to at least one of the preceding claims, **characterised in that** it comprises a step of measuring the degree of hardness of the water present in said reservoir tank (8).

8. A method according to at least one of the preceding claims, **characterised in that** it comprises a step of reading and storing a code (72) associated to a determined wafer (17), containing said dose of coffee, during the insertion of the latter in said chamber (16) and of stopping the preparation of the beverage in the event of a previously stored code (72).

9. A coffee machine of the type comprising:
a water reservoir tank (8);
a first water conduit (11) which takes from said reservoir tank (8);
a pump (12) connected to said first conduit (11) and from which a second conduit (13) originates;
a heat exchanger (14) provided with an electrical resistor (58), connected to said second conduit (13) and from which it is originated a channel (15) adapted to convey the heated water towards a chamber (16) where in use is placed a dose (17) of coffee; and
a nozzle (19) which originates from said chamber (16) and from which the coffee-based beverage is adapted to be released;
**characterised in that** said reservoir tank (8) is provided with means (62) adapted to increase the temperature of the water present in said reservoir tank (8).

10. A machine according to claim 9 **characterised in that** said reservoir tank (8) is provided with sensors (63 and 69) for detecting the maximum and minimum level of the water present in said reservoir tank (8).

11. A machine according to claim 9 and/or 10 **characterised in that** it comprises at least one active source (66) of ultraviolet rays directed towards the water present in said reservoir tank (8).

12. A machine according to at least one of the claims from 9 to 11, **characterised in that** it comprises a sensor (64) adapted to measure the temperature of the water present in said reservoir tank (8).

13. A machine according to at least one of the claims from 9 to 12, **characterised in that** it comprises a sensor (65) adapted to measure the degree of hardness of the water present in said reservoir tank (8).

14. A machine according to at least one of the claims from 9 to 13, **characterised in that** it comprises means (71) for reading a code (72) associated to a certain wafer (17) containing said dose of coffee.

15. A machine according to claim 14 **characterised in that** it comprises an electronic control unit (74) adapted to manage the various components of the machine itself and comprising a block (78) for controlling the various actuators installed, a block (81) which receives the signals from the installed measuring sensors, a counter block (79), a memory block (82) in which there are stored the temperature values to which the water in said reservoir tank (8) and in said heat exchanger (14) must be taken and in which there are stored said codes (72) of said previously used wafers (17), and a block (83) for comparing the various measured quantities.

16. A machine according to at least one of the claims from 9 to 15, **characterised in that** at least part of the surfaces of the installed components are coated with a layer of antibacterial polymers which prevent bacteria from depositing on such surfaces.

17. Coffee-based wafer **characterised in that** it comprises one portion in which an identification code is shown.
